# FASCICULE DE BREVET EUROPEEN

(11) **EP 1 781 833 B1**
(45) Date de publication et mention de la délivrance du brevet: **30.01.2008**
(21) Numéro de dépôt: 05790867.5
(22) Date de dépôt: 19.07.2005
(51) Int. Cl.: C22F 1/18, C22C 16/00

(54) **PROCEDE DE FABRICATION D'UN TUBE DE GAINAGE DE COMBUSTIBLE POUR REACTEUR NUCLEAIRE, ET TUBE AINSI OBTENU**
VERFAHREN ZUR HERSTELLUNG EINES BRENNSTOFFMANTELROHRS FÜR EINEN NUKLEARREAKTOR UND DARAUS HERGESTELLTES ROHR
METHOD FOR PRODUCTION OF A FUEL CASING TUBE FOR A NUCLEAR REACTOR AND TUBE OBTAINED THUS

(30) Priorité: 04.08.2004 FR 0408637
(43) Date de publication de la demande: 09.05.2007
(73) Titulaire: Areva NP, 92400 Courbevoie (FR)
(72) Inventeur: BARBERIS, Pierre, F-73400 UGINE (FR); MARDON, Jean-Paul, F-69300 CALUIRE (FR); REBEYROLLE, Véronique, F-74410 DUINGT (FR); AUBIN, Jean-Luc, F-44250 ST BREVIN (FR)
(74) Mandataire: Domenego, Bertrand
(86) Numéro de dépôt international: PCT/FR2005/001844
(87) Numéro de publication internationale: WO 2006/027436

(56) Documents cités:
- WO-A-00/36170
- WO-A-01/24193
- WO-A-01/24194
- WO-A-01/61062
- WO-A-97/05628
- US-A- 5 912 935
- US-B1- 6 261 516
- PATENT ABSTRACTS OF JAPAN vol. 1997, no. 02, 28 février 1997 (1997-02-28) & JP 08 253828 A (SUMITOMO METAL IND LTD), 1 octobre 1996 (1996-10-01)
- ISOBE T ET AL: "DEVELOPMENT OF HIGHLY CORROSION RESISTANT ZIRCONIUM-BASE ALLOYS" ZIRCONIUM IN THE NUCLEAR INDUSTRY: INTERNATIONAL SYMPOSIUM. ASTM STP, XX, XX, no. 1132, 1991, pages 346-367, XP000650111
- SCHEMEL J L CHARQUET D WADIER J-F: "INFLUENCE OF THE MANUFACTURING PROCESS ON THE CORROSION RESISTANCE OF ZIRCALOY-4 CLADDING" ZIRCONIUM IN THE NUCLEAR INDUSTRY: INTERNATIONAL SYMPOSIUM. ASTM STP, XX, XX, vol. 1023, 1989, pages 141-152, XP002956721
- OGATA K ET AL: "A SYSTEMATIC SURVEY OF THE FACTORS AFFECTING ZIRCALOY NODULAR CORROSION" ZIRCONIUM IN THE NUCLEAR INDUSTRY: INTERNATIONAL SYMPOSIUM. ASTM STP, XX, XX, vol. 1023, 1989, pages 291-314, XP002956722

## Description

L'invention concerne le domaine de la fabrication des éléments en alliage de zirconium utilisés dans les réacteurs de centrales nucléaires, notamment des tubes de gainage de combustible.

Les éléments en alliage de zirconium utilisés dans les réacteurs de centrales nucléaires à eau pressurisée, notamment pour constituer les tubes de gainage des pastilles de combustible, doivent présenter des caractéristiques élevées de résistance à divers types de corrosion. En particulier, la corrosion généralisée en milieu lithié et non lithié est particulièrement à considérer.

Diverses solutions à ce problème ont été proposées.

Le document EP-B1-0 840 931 propose d'utiliser des alliages quaternaires, c'est-à-dire des alliages de zirconium contenant des quantités significatives de trois éléments d'alliage, à savoir 0,8 à 1,8% de niobium, 0,2 à 0,6% d'étain et 0,02 à 0,4% de fer (tous les pourcentages, comme dans la suite de la description, sont des pourcentages en poids).

Dans ces alliages la teneur en carbone doit être maintenue entre 30 et 180ppm, celle en silicium entre 10 et 120ppm et celle en oxygène entre 600 et 1800ppm. Cette composition peut être couplée à un procédé de traitement thermo-mécanique particulier.

Le document EP-B1-1 149 180 propose également de tels alliages quaternaires, comprenant 0,5 à 1,6% de niobium, 0,3 à 0,6% de fer, 0,65 à 0,85% d'étain, éventuellement 50 à 120ppm de silicium et éventuellement 500 à 1600ppm d'oxygène. Les documents WO-A1-01/24193 et WO-A-01/24194 proposent d'utiliser des alliages de zirconium comprenant 0,8 à 2,3% de niobium, 0,02 à 1,0% de fer et moins de 2000 ppm d'étain (Sn) qui de plus remplissent la condition (Nb-0,5%)/Fe+Cr+V > 2,5.

Le but de l'invention est de proposer des tubes de gainage des pastilles de combustible de réacteurs nucléaires présentant des propriétés de résistance à la corrosion encore améliorées par rapport à ceux connus jusqu'à présent, en particulier lors d'expositions à de très hautes températures, de l'ordre de 900 à 1400°C. Ces températures peuvent être rencontrées lors d'accidents entraînant une perte de fluide réfrigérant.

A cet effet, l'invention a pour objet un procédé de fabrication d'un tube de gainage de combustible pour réacteur nucléaire, caractérisé en ce que :
- on prépare un lingot d'un alliage de zirconium de composition, en pourcentages pondéraux :
   - 0,8% ≤ Nb ≤ 2,8%
   - traces ≤ Sn ≤ 0,65%
   - 0,015% ≤ Fe ≤ 0,40%
   - C ≤ 100ppm
   - 600ppm ≤ O ≤ 2300ppm
   - 5ppm ≤ S ≤ 100ppm
   - Cr + V ≤ 0,25%
   - Hf ≤ 75ppm
   - F ≤ 1ppm
   le reste étant du zirconium et des impuretés résultant de l'élaboration ;
- on exécute sur le lingot un forgeage suivi d'un trempe, un filage et des traitements thermomécaniques comportant des laminages à froid séparés par des recuits intermédiaires, tous les recuits intermédiaires étant effectués à une température inférieure à la température de transus α → α + β de l'alliage, se terminant par un recuit de recristallisation et aboutissant à l'obtention d'un tube ;
- on procède optionnellement au décapage de la surface externe dudit. tube ;
- et on exécute un polissage mécanique de ladite surface externe pour lui conférer une rugosité Ra inférieure ou égale à 0,5µm.

La teneur en soufre du lingot est de préférence comprise entre 8 et 35ppm.

La teneur en oxygène du lingot est de préférence comprise entre 900 et 1800ppm.

La teneur en fer du lingot est de préférence comprise entre 0,020% et 0,35%.

La rugosité Ra conférée à la surface externe du tube après polissage est de préférence inférieure ou égale à 0,3µm.

De préférence, on exécute également un polissage mécanique de la surface interne du tube.

Ce polissage mécanique confère de préférence à la surface interne du tube une rugosité Ra inférieure ou égale à 0,4µm.

L'invention a également pour objet un tube de gainage de combustible pour réacteur nucléaire, caractérisé en ce que sa composition est :
- 0,8% ≤ Nb ≤ 2,8%
- traces ≤ Sn ≤ 0,65%
- 0,015% ≤ Fe ≤ 0,40%
- C ≤ 100ppm
- 600ppm ≤ O ≤ 2300ppm
- 5ppm ≤ S ≤ 100ppm
- Cr + V ≤ 0,25%
- Hf ≤ 75ppm
- F ≤ 1ppm
le reste étant du zirconium et des impuretés résultant de l'élaboration, et en ce que sa surface externe a une rugosité Ra inférieure ou égale à 0,5µm obtenue à la suite d'un polissage mécanique.

Sa teneur en soufre est de préférence comprise entre 8 et 35ppm.

Sa teneur en oxygène est de préférence comprise entre 900 et 1800ppm.

Sa teneur en fer est de préférence comprise entre 0,020% et 0,35%.

La surface externe du tube a, de préférence, une rugosité Ra inférieure ou égale à 0,3µm.

La surface interne du tube a, de préférence, une rugosité Ra inférieure ou égale à 0,4µm, obtenue à la suite d'un polissage mécanique.

L'invention repose sur un procédé de fabrication des tubes comportant plusieurs aspects :
- une composition optimisée sur les principaux éléments d'alliage, niobium, étain, fer, oxygène, ainsi que sur le carbone et le soufre ;
- l'obtention dans le produit final de très faibles teneurs en hafnium et en fluor ;
- un schéma de traitement thermomécanique dont les diverses opérations sont effectuées à de relativement basses températures, et incluant un traitement final de recristallisation ;
- l'exécution, après le traitement thermique final et un éventuel décapage, d'un polissage mécanique dont le but est, d'une part, de débarrasser la surface extérieure du tube de toute trace de fluor, et d'autre part de conférer à cette surface une très faible rugosité Ra, inférieure à 0,5µm, de préférence inférieure à 0,3µm.

L'invention sera mieux comprise à la lecture de la description qui suit, donnée en référence aux figures annexées suivantes :
- la figure 1 qui montre le gain de masse d'échantillons d'alliages de diverses teneurs en fer lors d'essais d'oxydation sous air à 1000°C ;
- la figure 2 qui montre le gain de masse d'échantillons d'alliages selon l'invention en fonction de la rugosité de la surface externe du tube, lors d'essais d'oxydation à 1020°C sous air.

L'alliage de zirconium utilisé dans le procédé selon l'invention doit être apte à procurer aux tubes une excellente résistance à la corrosion en milieu aqueux, notamment à de très hautes températures de l'ordre de 900 à 1400°C susceptibles d'être rencontrées lors d'accidents de perte de fluide réfrigérant. Selon l'invention, il a les caractéristiques suivantes.

Sa teneur en niobium est de 0,8 à 2,8% pour procurer de bonnes résistances à la corrosion et à l'hydruration dans des conditions normales de fonctionnement du réacteur.

Sa teneur en étain est comprise entre des traces et 0,65%. La limite habituelle de détection de cet élément est de l'ordre de 30ppm, et il doit être entendu que la teneur en étain peut descendre jusqu'à des valeurs aussi basses. Au-delà de 0,65%, on risque de dégrader la résistance à la corrosion dans des conditions de fonctionnement normales du réacteur.

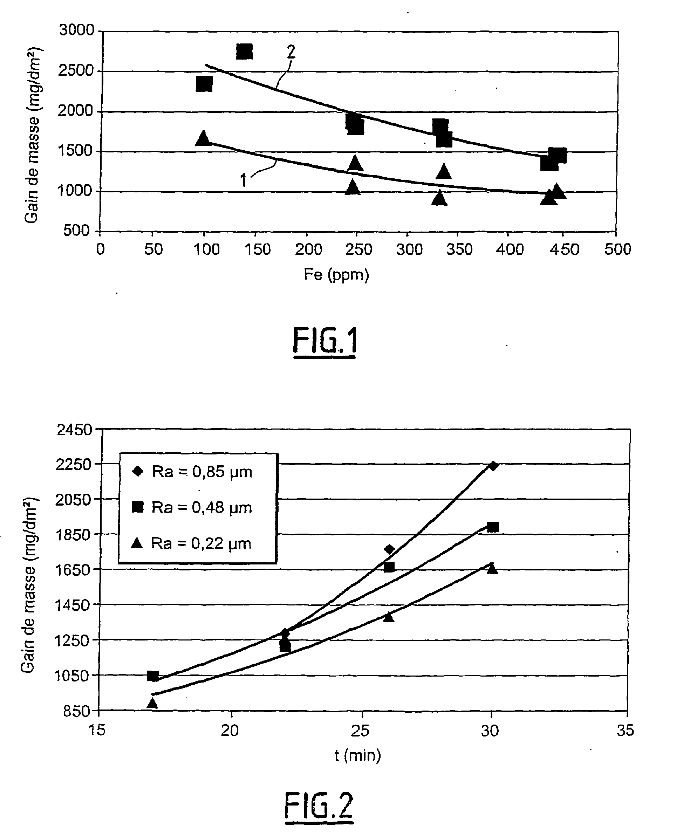

Sa teneur en fer est d'au moins 150ppm, de préférence au moins 200ppm, et d'au plus 0,40%, de préférence au plus 0,35%. En effet, comme le montre la figure 1, l'influence du fer sur la tenue à la corrosion à haute température est significative, même à des teneurs minimes. Cette figure montre le gain de masse (en mg/dm²), d'échantillons de composition 28ppm ≤ C ≤ 58ppm ; 32ppm ≤ Hf ≤ 47ppm ; 0,94% ≤ Nb ≤ 1,05% ; 927ppm ≤ O ≤ 1467ppm ; 10ppm ≤ S ≤ 34ppm ; Sn ≤ 47ppm ; F < 1 ppm, en fonction de la teneur en fer (en ppm), mesuré lors d'essais d'oxydation sous air à 1000°C au bout de 22 minutes (courbe 1) et 30 minutes (courbe 2). On voit que, même pour des teneurs en fer très basses, l'influence de cet élément est significative. A partir de 150ppm de fer, ou, mieux, de 200ppm, le gain de masse qui traduit la sensibilité à la corrosion décroît sensiblement.

Il n'est toutefois pas souhaitable de prévoir une teneur en fer allant au-delà de 0,40%. En effet, au-delà on dégrade la tenue au fluage du matériau, voire aussi sa tenue à la corrosion, aux températures normales de fonctionnement du réacteur (300-360°C par exemple). Une augmentation de l'hydruration serait aussi à craindre.

La teneur en carbone de l'alliage ne doit pas dépasser 100ppm pour conserver une bonne tenue à la corrosion.

L'alliage contient entre 600 et 2300ppm d'oxygène, de préférence entre 900 et 1800ppm, pour procurer un bon comportement mécanique et une bonne résistance au fluage.

La teneur en soufre doit être maintenue entre 5 et 100ppm, de préférence entre 8 et 35ppm, pour une bonne tenue au fluage.

Du chrome et du vanadium peuvent optionnellement être présents, à condition que la somme de leurs teneurs ne dépasse pas 0,25%.

Deux autres éléments doivent être impérativement pris en compte : le hafnium et le fluor.

La présence de hafnium au sein de l'alliage est à éviter. En effet, il s'avère que cet élément a une influence significative sur la tenue à la corrosion de l'alliage dans des conditions extrêmes de température. Il est présent dans les minerais de zirconium et doit être séparé lors de l'élaboration de l'éponge de zirconium car, comme on le sait, il serait un frein à la pénétration des neutrons. On considère habituellement qu'une éponge de zirconium ne doit pas contenir plus de 100ppm de hafnium lorsqu'elle doit servir à fabriquer un alliage d'usage nucléaire. Selon l'invention, cette teneur doit être encore plus basse, de sorte que dans l'alliage final, on ne retrouve pas plus de 75ppm de hafnium. Un soin particulier doit donc être apporté à la séparation du hafnium lors de la préparation de l'éponge de zirconium à partir de laquelle est fabriqué l'alliage.

Le fluor présent au sein de l'alliage a également une influence sur la tenue à la corrosion dans des conditions extrêmes de température. Sa teneur doit être limitée à 1ppm au maximum. Les procédés de préparation de l'éponge de zirconium pour la fabrication de l'alliage fondés sur une électrolyse en bain de fluorures sont à éviter, des composés fluorés pouvant être piégés dans les cristaux au moment de leur formation.

Une exigence très importante est également l'absence de fluorures à la surface de l'alliage.

De tels fluorures sont classiquement présents, notamment lorsque le tube a subi un décapage dans une solution contenant de l'acide fluorhydrique. Ils sont connus pour produire des traces blanches lors de la corrosion en autoclave, par exemple à 400°C sous 10,5MPa de vapeur d'eau. C'est pourquoi la norme ASTM-G2 gérant les tests de corrosion préconise un rinçage efficace dans un mélange alcool/acétone après décapage pour éliminer les traces de fluorures résiduels, en particulier NaF et KF.

Cependant, les inventeurs ont constaté que des échantillons d'alliage de zirconium ainsi préparés, y compris avec un rinçage soigné, présentent néanmoins une corrosion de type hétérogène lorsqu'ils sont portés à haute température (900-1050°C) sous air. En présence de vapeur d'eau, ce phénomène est encore accentué. Ces échantillons, testés à 400°C en autoclave sous 10,5MPa de vapeur d'eau, présentent une corrosion uniforme.

Les inventeurs ont également constaté que des échantillons semblables n'ayant subi ni décapage ni rinçage ne présentent pas ces phénomènes de corrosion localisée à haute température, et se comportent également très bien lors du test en autoclave.

Il s'avère, en fait, que les rinçages habituels, même effectués avec soin, ne permettent pas d'éliminer la totalité des fluorures subsistant en extrême surface. Ce sont probablement les fluorures subsistants qui contribuent à la corrosion hétérogène des échantillons à haute température.

Il est donc absolument indispensable, pour résoudre le problème à la base de l'invention, d'utiliser des préparations de surfaces qui aboutissent à une élimination radicale des fluorures. De ce point de vue, la réalisation d'un polissage mécanique en plus ou à la place du décapage chimique est le procédé le plus indiqué pour préparer la surface du tube avant son utilisation. Un polissage électrolytique, habituellement réalisé dans une solution d'acides fluorhydrique et nitrique, ne serait en revanche pas adéquat, car les traces de fluor à la surface du tube ne pourraient pas être ensuite éliminées de façon suffisante.

La préparation des tubes à partir du lingot résultant de l'élaboration de l'alliage s'effectue selon un procédé comportant un forgeage suivi d'une trempe, un filage, et des laminages à froid séparés par des recuits intermédiaires, tous les recuits étant effectués à une température inférieure à la température de transus α → α + β de l'alliage, donc généralement à moins de 600°C. Ces traitements thermiques à relativement basse température permettent d'obtenir une bonne tenue à la corrosion dans des conditions normales de service, incluant un traitement final de recristallisation pour obtenir une bonne tenue au fluage.

Une autre condition nécessaire à la résolution du problème posé est l'imposition à la surface externe du tube d'une très faible rugosité Ra, inférieure ou égale à 0,5µm, de préférence inférieure ou égale à 0,3µm. Une réalisation adéquate du polissage mécanique précité permet d'obtenir ce résultat.

Il est déjà connu que la forte rugosité de la surface d'un tube de gainage dégrade la tenue à la corrosion en réacteur. Des auteurs ont montrés qu'un polissage d'alliages binaires de type E110 à 1% de niobium permettait de ralentir l'apparition de la corrosion nodulaire. Toutefois, à haute température (1000°C), cette corrosion ne peut pas être évitée (L. YEGOROVA et al : LOCA Behavior of E110 Alloy, Nuclear Safety Research Conference, Washington DC, 20-22.X.2003).

Les inventeurs ont montré qu'un tel polissage mécanique, imposant une rugosité Ra inférieure ou égale à 0,5µm et de préférence inférieure ou égale à 0,3µm à la surface du tube, couplé à une composition et à une préparation du tube conformes à ce qui a été exposé précédemment, permettait d'obtenir les résultats souhaités en matière de tenue à la corrosion à haute température.

La figure 2 montre les résultats de mesures de la cinétique d'oxydation d'un tube d'alliage de zirconium contenant Nb = 0,94% ; Sn < 30ppm ; C = 42ppm ; Cr = 47ppm ; Fe = 328ppm ; Hf = 42ppm ; O = 1467ppm ; S = 13ppm ; F < 1ppm à 1020°C sous air, pour différentes rugosités.

Après 22 minutes d'essai, l'échantillon à Ra = 0,85µm voit sa cinétique d'oxydation s'accélérer considérablement. Pour un Ra de 0,48µm, on n'observe ce phénomène que de façon très atténuée. Enfin pour un Ra de 0,22µm, la cinétique d'oxydation est pratiquement linéaire. On considère qu'au-delà d'une rugosité de 0,50µm, la cinétique d'oxydation correspond à une sensibilité à la corrosion qui ne permet plus de résoudre le problème posé de façon satisfaisante.

Il est également conseillé de pratiquer un polissage mécanique de la surface interne du tube. La faible rugosité et la suppression de la contamination en fluor que procurent ce polissage sont également bénéfiques pour réduire l'oxydation, et aussi pour réduire la corrosion sous contrainte qui est liée à l'interaction entre le tube et les pastilles de combustible qu'il contient. De préférence, ce polissage doit conférer à la surface interne une rugosité Ra inférieure ou égale à 0,4µm.

## Revendications

1. Procédé de fabrication d'un tube de gainage de combustible pour réacteur nucléaire, **caractérisé en ce que** :
- on prépare un lingot d'un alliage de zirconium de composition, en pourcentages pondéraux :
- 0,8% ≤ Nb ≤ 2,8%
- traces ≤ Sn ≤ 0,65%
- 0,015% ≤ Fe ≤ 0,40%
- C ≤ 100ppm
- 600ppm ≤ O ≤ 2300ppm
- 5ppm ≤ S ≤ 100ppm
- Cr + V ≤ 0,25%
- Hf ≤ 75ppm
- F ≤ 1ppm
le reste étant du zirconium et des impuretés résultant de l'élaboration ;
- on exécute sur le lingot un forgeage suivi d'une trempe, un filage et des traitements thermomécaniques comportant des laminages à froid séparés par des recuits intermédiaires, tous les recuits intermédiaires étant effectués à une température inférieure à la température de transus α → α + β de l'alliage, se terminant par un recuit de recristallisation et aboutissant à l'obtention d'un tube ;
- on procède optionnellement au décapage de la surface externe dudit tube ;
- et on exécute un polissage mécanique de ladite surface externe pour lui conférer une rugosité Ra inférieure ou égale à 0,5µm.

2. Procédé selon la revendication 1, **caractérisé en ce que** la teneur en soufre du lingot est comprise entre 8 et 35ppm.

3. Procédé selon la revendication 1 ou 2, **caractérisé en ce que** la teneur en oxygène du lingot est comprise entre 900 et 1800ppm.

4. Procédé selon l'une des revendications 1 à 3, **caractérisé en ce que** la teneur en fer du lingot et comprise entre 0,020% et 0,35%.

5. Procédé selon l'une des revendications 1 à 4, **caractérisé en ce que** les recuits intermédiaires sont effectués à des températures inférieures ou égales à 600°C.

6. Procédé selon l'une des revendications 1 à 5, **caractérisé en ce que** la rugosité Ra conférée à la surface externe du tube après polissage est inférieure ou égale à 0,3µm.

7. Procédé selon l'une des revendications 1 à 6, **caractérisé en ce qu'**on exécute également un polissage mécanique de la surface interne du tube.

8. Procédé selon la revendication 7, **caractérisé en ce que** le polissage mécanique confère à la surface interne du tube une rugosité Ra inférieure ou égale à 0,4µm.

9. Tube de gainage de combustible pour réacteur nucléaire, **caractérisé en ce que** sa composition est :
- 0,8% ≤ Nb ≤ 2,8%
- traces ≤ Sn ≤ 0,65%
- 0,015% ≤ Fe ≤ 0,40%
- C ≤ 100ppm
- 600ppm ≤ O ≤ 2300ppm
- 5ppm ≤ S ≤ 100ppm
- Cr + V ≤ 0,25%
- Hf ≤ 75ppm
- F ≤ 1 ppm
le reste étant du zirconium et des impuretés résultant de l'élaboration ;
et **en ce que** sa surface externe a une rugosité Ra inférieure ou égale à 0,5µm, obtenue à la suite d'un polissage mécanique.

10. Tube selon la revendication 9, **caractérisé en ce que** sa teneur en soufre est comprise entre 8 et 35ppm.

11. Tube selon la revendication 9 ou 10, **caractérisé en ce que** sa teneur en oxygène est comprise entre 900 et 1800ppm.

12. Tube selon l'une des revendications 9 à 11, **caractérisé en ce que** sa teneur en fer est comprise entre 0,020% et 0,35%.

13. Tube selon l'une des revendications 8 à 11, **caractérisé en ce que** la surface externe a une rugosité Ra inférieure ou égale à 0,3µm.

14. Tube selon l'une des revendications 8 à 13, **caractérisé en ce que** la surface interne a une rugosité Ra inférieure ou égale à 0,4µm, obtenue à la suite d'un polissage mécanique.

## Claims

1. Method of manufacturing a fuel sheathing tube for a nuclear reactor,
**characterised in that**:
- an ingot of a zirconium alloy is prepared having the following composition in parts by weight;
0.8% ≤ Nb ≤ 2.8%
traces ≤ Sn ≤ 0.65%
0.015% ≤ Fe ≤ 0.40%
C ≤ 100 ppm
600 ppm ≤ O ≤ 2300 ppm
5 ppm ≤ S ≤ 100 ppm
Cr + V ≤ 0.25%
Hf ≤ 75 ppm
F ≤ 1 ppm
the remainder being zirconium and impurities resulting from the working process;
- the ingot is subjected to forging followed by tempering, drawing and thermomechanical treatments comprising cold-rolling steps separated by intermediate anneals, all the intermediate anneals being carried out at a temperature below the transus temperature α → α + β of the alloy, ending with a recrystallising anneal and resulting in the formation of a tube;
- optionally the outer surface of said tube is pickled;
- and said outer surface is mechanically polished to give it a roughness Ra less than or equal to 0.5 µm.

2. Method according to claim 1, **characterised in that** the sulphur content of the ingot is between 8 and 35 ppm.

3. Method according to claim 1 or 2, **characterised in that** the oxygen content of the ingot is between 900 and 1800 ppm.

4. Method according to one of claims 1 to 3, **characterised in that** the iron content of the ingot is between 0.020% and 0.35%.

5. Method according to one of claims 1 to 4, **characterised in that** the intermediate anneals are carried out at temperatures below or equal to 600°C.

6. Method according to one of claims 1 to 5, **characterised in that** the roughness Ra imparted to the outer surface of the tube after polishing is less than or equal to 0.3 µm.

7. Method according to one of claims 1 to 6, **characterised in that** mechanical polishing is also carried out on the inner surface of the tube.

8. Method according to claim 7, **characterised in that** the mechanical polishing gives the inner surface of the tube a roughness Ra less than or equal to 0.4 µm.

9. Fuel sheathing tube for a nuclear reactor, **characterised in that** its composition is as follows:
0.8% ≤ Nb ≤ 2.8%
traces ≤ Sn ≤ 0.65%
0.015% ≤ Fe ≤ 0.40%
C ≤ 100 ppm
600 ppm ≤ O ≤ 2300 ppm
5 ppm ≤ S ≤ 100 ppm
Cr + V ≤ 0.25%
Hf ≤ 75ppm
F ≤ 1 ppm
the remainder being zirconium and impurities resulting from the working process;
and **in that** its outer surface has a roughness Ra which is less than or equal to 0.5 µm, obtained after mechanical polishing.

10. Tube according to claim 9, **characterised in that** its sulphur content is between 8 and 35 ppm.

11. Tube according to claim 9 or 10, **characterised in that** its oxygen content is between 900 and 1800 ppm.

12. Tube according to one of claims 9 to 11, **characterised in that** its iron content is between 0.020% and 0.35%.

13. Tube according to one of claims 8 to 11, **characterised in that** the outer surface has a roughness Ra which is less than or equal to 0.3 µm.

14. Tube according to one of claims 8 to 13, **characterised in that** the inner surface has a roughness Ra which is less than or equal to 0.4 µm, obtained after mechanical polishing.

## Patentansprüche

1. Verfahren zur Herstellung eines Brennstoffmantelrohrs für einen Nuklearreaktor,
**dadurch gekennzeichnet, dass**:
- man einen Block aus einer Zirkonlegierung folgender Zusammensetzung in Gewichtsprozenten herstellt:
- 0,8% ≤ Nb ≤ 2,8%
- Spuren ≤ Sn ≤ 0,65%
- 0,015% ≤ Fe ≤ 0,40%
- C ≤ 100ppm
- 600ppm ≤ O ≤ 2300ppm
- 5ppm ≤ S ≤ 100ppm
- Cr + V ≤ 0,25%
- Hf ≤ 75ppm
- F ≤ 1ppm
wobei der Rest durch Zirkon und herstellungsbedingte Verunreinigungen gebildet wird;
- man den Block schmiedet und anschließend abschreckt, einem Ziehvorgang und thermomechanischen Bearbeitungen unterzieht, die Kaltwalzungen umfassen, getrennt durch Zwischentemperungen, wobei alle Zwischentemperungen bei einer Temperatur unter der α→α+β-Transustemperatur der Legierung durchgeführt werden, mit einer Rekristallisationstemperung enden und zu der Herstellung eines Rohrs führen.
- man optional die Beizung der Außenoberfläche des genannten Rohrs vornimmt;
- und man eine mechanische Politur der genannten Außenoberfläche durchführt, um ihr eine Rauheit Ra ≤ 0,5 µm zu verleihen.

2. Verfahren nach Anspruch 1, **dadurch gekennzeichnet, dass** der Schwefelgehalt des Blocks zwischen 8 und 35 ppm enthalten ist.

3. Verfahren nach Anspruch 1 oder 2, **dadurch gekennzeichnet, dass** der Sauerstoffgehalt des Blocks zwischen 900 und 1800 ppm enthalten ist.

4. Verfahren nach einem der Ansprüche 1 bis 3, **dadurch gekennzeichnet, dass** der Eisengehalt des Blocks zwischen 0,020 % und 0,35 % enthalten ist.

5. Verfahren nach einem der Ansprüche 1 bis 4, **dadurch gekennzeichnet, dass** die Zwischentemperungen bei Temperaturen ≤ 600 °C durchgeführt werden.

6. Verfahren nach einem der Ansprüche 1 bis 5, **dadurch gekennzeichnet, dass** die der Außenoberfläche des Rohrs verliehene Rauheit nach der Politur ≤ 0,3 µm beträgt.

7. Verfahren nach einem der Ansprüche 1 bis 6, **dadurch gekennzeichnet, dass** man auch eine mechanische Politur der Innenoberfläche des Rohrs durchführt.

8. Verfahren nach Anspruch 7, **dadurch gekennzeichnet, dass** die Rauheit der Innenoberfläche des Rohrs nach der mechanischen Politur ≤ 0,4 µm beträgt.

9. Brennstoffmantelrohr für Nuklearreaktor,
**dadurch gekennzeichnet, dass** es folgende Zusammensetzung hat:
- 0,8% ≤ Nb ≤ 2,8%
- Spuren ≤ Sn ≤ 0,65%
- 0,015% ≤ Fe ≤ 0,40%
- C ≤ 100ppm
- 600ppm ≤ O ≤ 2300ppm
- 5ppm ≤ S ≤ 100ppm
- Cr + V ≤ 0,25%
- Hf ≤ 75ppm
- F ≤ 1 ppm
wobei der Rest durch Zirkon und herstellungsbedingte Verunreinigungen gebildet wird; und **dadurch**, dass seine Außenoberfläche eine Rauheit Ra ≤ 0,5 µm hat, erzielt durch eine mechanische Politur.

10. Rohr nach Anspruch 9, **dadurch gekennzeichnet, dass** sein Schwefelgehalt zwischen 8 und 35 ppm enthalten ist.

11. Rohr nach Anspruch 9 oder 10, **dadurch gekennzeichnet, dass** sein Sauerstoffgehalt zwischen 900 und 1800 ppm enthalten ist.

12. Rohr nach Anspruch 9 bis 11, **dadurch gekennzeichnet, dass** sein Eisengehalt zwischen 0,020 % und 0,35 % enthalten ist.

13. Rohr nach Anspruch 8 bis 11, **dadurch gekennzeichnet, dass** die Außenoberfläche eine Rauheit Ra ≤ 0,3 µm hat.

14. Rohr nach Anspruch 8 bis 13, **dadurch gekennzeichnet, dass** die Innenoberfläche eine Rauheit Ra ≤ 0,4 µm hat, erzielt durch eine mechanische Politur.
